# EUROPEAN PATENT APPLICATION

(11) **EP 1 768 286 A2**
(43) Date of publication of application: **28.03.2007**
(21) Application number: 06019870.2
(22) Date of filing: 22.09.2006
(51) Int. Cl.: H04H 9/00

(54) **Method and apparatus for monitoring TV channel selecting status**

(30) Priority: 22.09.2005 JP 2005274986
(71) Applicant: K.K.Video Research, Tokyo 104-0042 (JP)
(72) Inventor: Tanaka, Hiroshi, Chuo-ku Tokyo (JP); Aoyama, Yoshikazu, Chuo-ku Tokyo (JP)
(74) Representative: HOFFMANN EITLE

(57) **Abstract**

To identify the channel being actually selected by a TV set (1) having built therein a digital tuner (11), a meter (2), which forms a channel selecting status monitoring apparatus, is connected via a cable (3) to a digital audio output terminal (12) of the TV set (1) that outputs a digital audio signal of the selected channel. A digital audio signal comparison part (22) checks whether the contents of a payload of a data-burst generated from the digital audio signal output from the digital audio output terminal (12) coincides with the contents of a payload of a data-burst generated from a digital audio signal from a reference tuner (21), taking into consideration delays of the both digital audio signals on the time base. A control part (25) controls the channel selecting status of the reference tuner (21) so that the output from the digital audio signal comparison part (22) may remain coincidence-detected, and determines, as a selected channel, the channel being selected by the reference tuner (21) when the output from the digital audio signal comparison part (22) becomes coincidence-detected.

## Description

### BACKGROUND OF THE INVENTION

### (1) Field of the Invention

The present invention relates to a TV channel selecting status monitoring method and apparatus for identifying the channel on which a TV program is being actually viewed.

### (2) Description of the Prior Art

In recent years digital terrestrial television broadcasting has become operational, ushering in the era of full-scale digital broadcasting at last in our country. This leads to a change in the target of a TV audience rating survey from a conventional type of TV set having a built-in analog tuner to a TV set of the type having contained therein a digital tuner, which brings up an important issue of developing TV audience measurement technology suitable for use with the TV set having built therein the digital tuner.

In Japanese Patent No. 3669965 (hereinafter referred to as patent document 1) there is described a prior art example of identifying the channel to which the TV set having a built-in digital tuner is being actually tuned. According to patent document 1, a digital audio signal from a reference tuner of the same kind as the digital tuner contained in the TV set (hereinafter referred to simply as a TV) is decoded, for example, by an MPEG2-ACC decoder into an analog signal, which is compared in frequency spectrum with an audio signal from a loudspeaker of the TV to thereby identify the channel on which a program is being actually viewed.

The method of identifying the channel by comparing the frequency spectra of the reproduced analog audio signals also finds application in the channel identification of an analog broadcast, but suffers a fatal defect of impossibility of channel identification when sound or voice being broadcast is almost silent. The reason is that in such case the frequency spectrum of the analog audio signal does not ever appear or, even if it appears, at a level as weak as a noise level.

### SUMMARY OF THE INVENTION

An object of the present invention is to provide a selected channel identifying method and apparatus suitable for use with the TV having a built-in digital tuner.

Another object of the present invention is to provide a selected channel identifying method and apparatus with which it is possible to accurately identify a selected channel even if it is substantially silent.

TVs of the type containing a digital tuner mostly have an output terminal (such as an optical digital audio output terminal) for outputting a digital audio signal of the channel selected by the digital tuner. The digital audio signal of the selected channel can also be derived from a reference tuner of a meter for monitoring the channel selecting status. However, these digital audio signals are those encoded by a biphase-mark scheme as defined in IEC (INTERNATIONAL ELECTROTECHNICAL COMMISSION) 60958-1; a comparison of these signals does not allow ease in accurately identifying the channel being selected. The reason for this is that the signals encoded by the biphase-mark scheme differ from one manufacturer's tuner to another or according to individual models of the tuners used even if the signals are of the same channel. In view of this, based on the fact that the contents of burst payloads of data-bursts, which are generated from bit strings decoded from the signals encoded by the biphase-mark scheme, do not vary according to the particular tuner or manufacturer and that the payloads inevitably have the same contents when the same channel is being selected, the present invention adopts a scheme of comparing the contents of the data-bursts for identification of the channel being selected. Furthermore, since a time lag occurs between the digital audio signal from the digital tuner and the digital audio signal from the reference tuner due to delays in the circuit operation of tuner sets and in their processing, the timing for decoding broadcast waves, or the like, a mere comparison of the contents of data-bursts generated at the same time is incomplete for identification of the channel being selected. The present invention solves this problem by making the comparison in consideration of a time-base delay.

According to a first aspect of the present invention, there is provided a TV channel selecting status monitoring method which identifies the channel being actually received by a TV set having at least one built-in digital tuner and a digital audio output terminal from which video and audio signals of the channel selected by the built-in tuner can be provided to a display and a loudspeaker, respectively, and a digital audio signal of the selected channel can also be output, said method comprising the steps of: a) controlling the channel tuning status of a reference tuner to bring a digital audio signal from said reference tuner into coincidence with the digital audio signal output from said digital audio output terminal of said TV set, said reference tuner being capable of outputting a digital audio signal of an arbitrary one of a predetermined number of channels; and b) determining, as the currently selected channel, the channel being tuned by said reference tuner at the time when said both digital audio signals coincide with each other, and storing in storage means selected-channel data containing information about said channel determined as being currently selected and the corresponding time information. The method is characterized in that said step a) includes a step of making a check, in consideration of a time-base delay of said both digital audio signals, to see whether or not the contents of a payload of a data-burst generated from the digital audio signal output from said digital audio output terminal of said TV is coincident with the contents of a payload of a data-burst generated from the digital audio signal output from said reference tuner.

According to a second aspect of the present invention, the TV channel selecting status monitoring method of the first aspect is characterized in that said step a) includes the steps of: a-1) for each data-burst generated from said digital audio signal output from said reference tuner, extracting a bit string at a predetermined position as reference data; a-2) for each data-burst generated from said digital audio signal output from said digital audio output terminal, extracting, as comparison data, a bit string at the same position as said predetermined position; a-3) for each pair of reference and comparison data, comparing said reference data extracted in said step a-1) and said comparison data extracted from said data-burst generated in said step α-2) within a time interval with a predetermined time width set equally before and after the instant of having extracted said reference data, and outputting the result of comparison for said each pair; and a-4) outputting a coincidence-detected signal when a coincidence is found in the comparison result in any one of said pairs of reference and comparison data.

According to a third aspect of the present invention, the TV channel selecting status monitoring method of the second aspect is characterized in that said step a-4) is a step of outputting said coincidence-detected signal when a coincidence was found a plurality of times in a row in the comparison result in any one of said pairs of reference and comparison data.

According to the first aspect of the present invention, there is provided a TV channel selecting status monitoring apparatus which identifies the channel being actually received by a TV set having at least one built-in digital tuner and a digital audio output terminal from which video and audio signals of said channel selected by said built-in tuner can be provided to a display and a loudspeaker, respectively, and a digital audio signal of said selected channel can also be output, said apparatus comprising: a reference tuner capable of outputting a digital audio signal of an arbitrary one of a plurality of predetermined channels; digital audio signal comparing means by which the contents of a payload of a data-burst generated from said digital audio signal output from said digital audio output terminal of said TV set are checked for coincidence with the contents of a payload of a data-burst generated from said digital audio signal output from said reference tuner, in consideration of a time-base delay of both of said digital audio signals; and control means which controls the channel tuning status of said reference tuner and which, when the output from said digital audio signal comparing means changes from a coincidence-detected output to a noncoincidence-detected output, changes the channel tuned by said reference tuner from one channel to another until the channel tuned by said reference tuner is found for which said digital audio signal comparing means outputs a coincidence-detected signal, determines, as the channel being actually selected, the channel being tuned by said reference tuner when the output from said digital audio signal comparing means returns to the coincidence-detected output, and outputs selected-channel data containing information about said channel as being currently tuned and the corresponding time information.

According to the second aspect of the present invention, the channel selecting status monitoring apparatus of the first aspect is characterized in that said digital audio signal comparing means includes: a reference data extracting part which, for each data-burst generated from said digital audio signal output from said reference tuner, extracts a bit string at a predetermined position as reference data; a comparison data extracting part which, for each data-burst generated from said digital audio signal output from said digital audio output terminal, extracts, as comparison data, a bit string at the same position as said predetermined position; a comparison part which, for each pair of reference and comparison data, compares said reference data extracted in said reference data extracting part and said comparison data extracted from said data-burst generated in said comparison data extracting part within a time interval with a predetermined time width set equally before and after the instant of having extracted said reference data, and outputs the result of comparison for said each pair; and a decision part which outputs a coincidence-detected signal when a coincidence is found in the comparison result in any one of said pairs of reference and comparison data.

According to the third aspect of the present invention, the channel selecting status monitoring apparatus of the second aspect is characterized in that said comparison part includes: a reference-side FIFO memory which stores, in reverse chronological order, a plurality of pieces of reference data extracted in said reference data; a comparison-side FIFO memory which stores, in reverse chronological order, a plurality of pieces of comparison data extracted in said comparison extracting part; and comparators which, upon each input a new piece of reference data and a new piece of comparison data in said reference-side FIFO memory and said comparison-side FIFO memory, makes a comparison between said newly input reference data and said newly input comparison data, between said newly input reference data and the comparison data already stored in said comparison-side FIFO memory, and between said newly input comparison data and the reference data already stored in said reference-side FIFO memory, and outputs a comparison output for each pair of reference and comparison data.

According to a fourth aspect of the present invention, the channel selecting status monitoring apparatus of the second aspect is characterized in that said decision part outputs a coincidence-detected signal when a coincidence was found n times in succession in the comparison result for any one of the pairs of reference and comparison data which are output from said comparison part.

According to a fifth aspect of the present invention, the channel selecting status monitoring apparatus of the fourth aspect is characterized in that said decision part includes: comparison-result FIFOs each of which stores a plurality of previous comparison results for one pair of reference and comparison data which are output from said comparison part; AND gates each of which detects whether a coincidence is found in every comparison result stored in said each comparison-result FIFO memory, and an OR gate into which the detected output is input from said each AND gate.

With the TV channel selecting status monitoring method and apparatus according to the present invention, it is possible to accurately identify the channel on which a TV program is being actually viewed even if the channel is substantially in the state of silence. The reason for this is as follows: even in substantially a silent channel in which the frequency spectrum of reproduced sound or speech does not ever appear or, if it appears, at a very low level substantially equal to a noise level, the digital audio signal of such a channel contains a signal clearly distinguishable from digital audio signals of the other channels, and the prevention invention compares such signals on a digital-wise basis.

### BRIEF DESCRIPTION OF THE DRAWINGS

Fig. 1 is a block diagram illustrating an embodiment of the present invention.
Fig. 2 is a block diagram showing an example of the configuration of a digital audio signal comparison part.
Figs. 3(a) and (b) are diagrams showing, by way of example, the format of a data-burst and the extraction of comparison data.
Fig. 4 is a diagram showing how to store reference data extracted from the data-burst and the comparison data in a FIFO memory for the reference data and a FIFO memory for the comparison data.
Fig. 5 is a diagram showing combinations of the reference data and the comparison data that are compared in the digital audio signal comparison part.
Fig. 6 is a diagram explanatory of decision results that are stored in the digital audio signal comparison part.
Fig. 7 is a diagram explanatory of a list of channels to be monitored for identification.
Fig. 8 is a flowchart showing a control operation of a control part.
Fig. 9 is a diagram showing the relationships between concrete examples of the decision results to be stored in the digital audio signal comparison part and a final decision result.

### DETAILED DESCRIPTION OF THE PREFERRED EMBODIMENTS

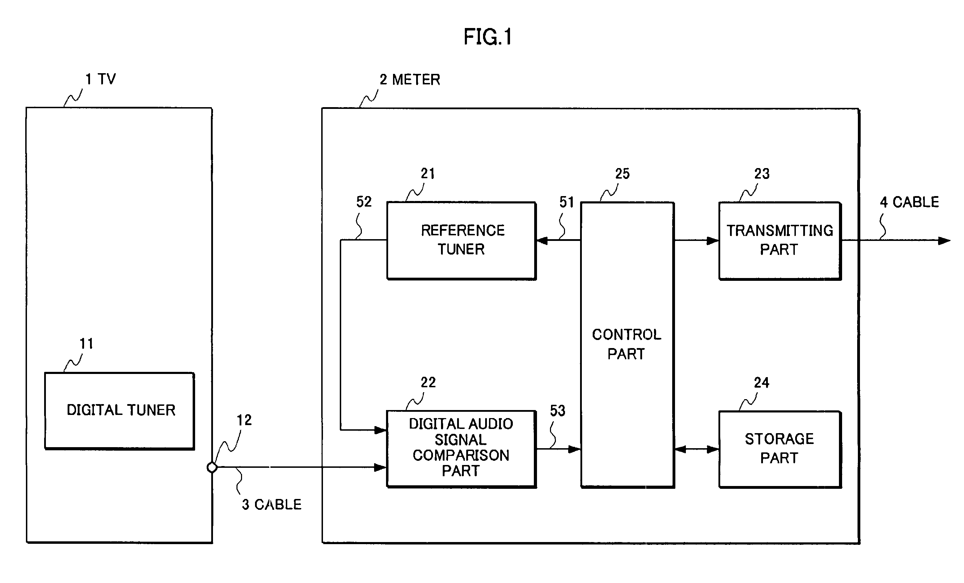

Referring first to Fig. 1, an embodiment of the present invention is made up of a TV 1 owned by a user to be surveyed for audience rating, and a meter 2 provided as a monitoring apparatus for audience rating measurement.

The TV 1 has built therein a digital tuner 11 such as a terrestrial digital tuner or BS digital tuner. The TV 1 is capable of outputting video and audio signals of the channel selected by the digital tuner 11 to a display and a loudspeaker both of which are not shown, while at the same time it can output the digital audio signal of the selected channel to an output terminal 12. The output terminal 12 is an optical digital audio output terminal or coaxial digital audio output terminal. The output terminal 12 of the TV 1 and the monitoring apparatus 2 are interconnected by an optical digital cable, coaxial or similar cable 3.

The monitoring apparatus 2 is connected via the cable 3 to the TV 1 and is also connected via a cable 4 to a telephone line for transmitting measured data to a center not shown. In the monitoring apparatus 2 there are disposed a reference tuner 21, a digital audio signal comparison part 22, a transmitting part 23, a storage part 24 and a control part 25 connected to them.

The reference tuner 21 is provided independently of the digital tuner 11 built in the TV 1, for receiving and selecting, on the monitoring apparatus 2 side, channels of digital broadcasting that can be received and selected by the digital tuner 11; the reference tuner selects the channel specified by the control part 25 via a signal line, and outputs the digital audio signal of the selected channel to the digital audio signal comparison part 22 via a signal line 52.

The digital audio signal comparison part 22 compares the digital audio signal input thereto via the cable 3 from the output terminal 12 of the TV 1 and the digital audio signal input via the signal line 52 from the reference tuner 21, and provides the comparison result via a signal line 53 to the control part 25.

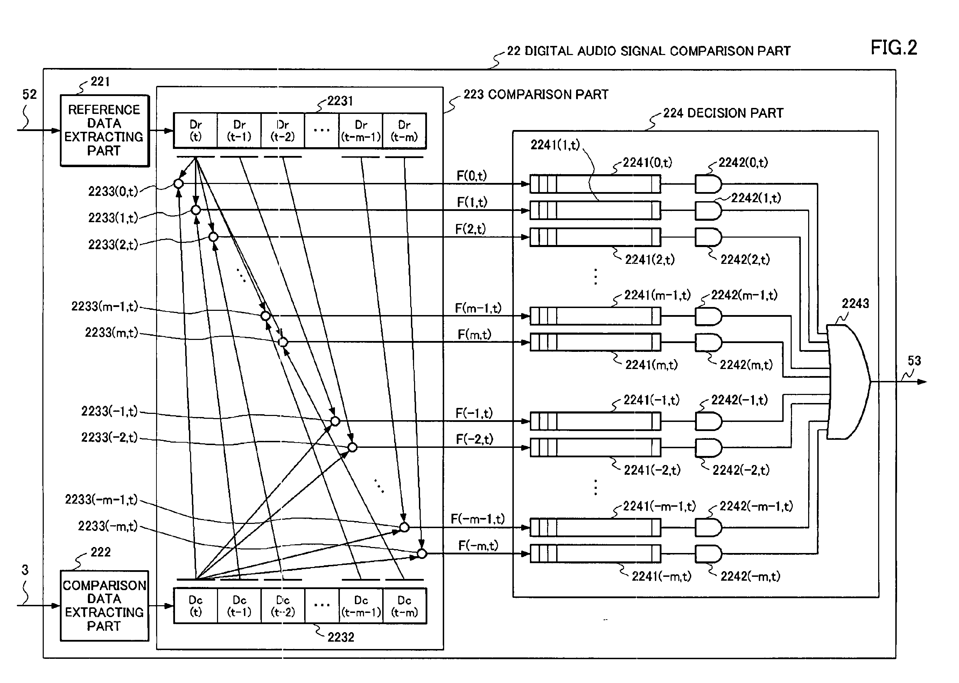

Referring next to Fig. 2, the digital audio signal comparison part 22 comprises, for example, a reference data extracting part 221, a comparison data extracting part 222, a comparison part 223 and a decision part 224.

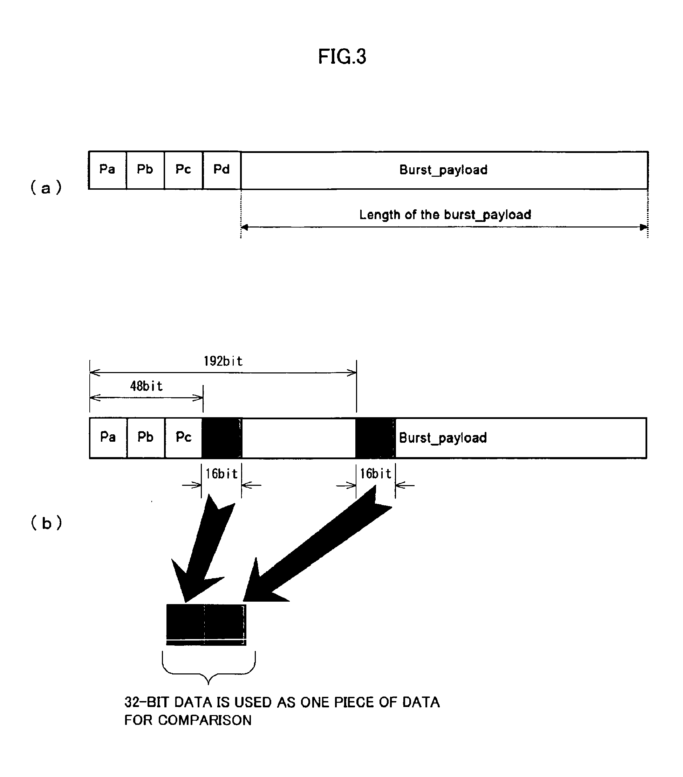

The reference data extracting part 221 receives the digital audio signal from the reference tuner 21via the signal line 52, then generates an IEC60958-1-defined sub-frame from the digital audio signal, then generates IEC61937-defined data-bursts from the sub-frame, and for each data-burst extracts and provides a bit string at a predetermined position as reference data to the comparison part 223. On the other hand, the comparison data extracting part 222 receives the digital audio signal via the cable 3 from the output terminal 12 of the TV 1, then generates from the digital audio signal an IEC60958-1-defined sub-frame from the digital audio signal, then generates IEC61937-1-defined data-bursts from the sub-frame, and for each data-burst extracts a bit string at the same predetermined position as that of the bit string in the reference data extracting part 221 and provides the bit string as comparison data to the comparison part 223. The data-burst defined by IEC61937-1 is made up, as depicted in Fig. 3(a), of four preamble signals a to d (Pa to Pd) each consisting of 16 bits and a burst-payload immediately following them; in the case of digital broadcasting, MPEG2-AAC data is recorded in the burst-payload. The position at which to extract the above-mentioned bit string may be anywhere in the burst-payload. The bit string may also be extracted from the preamble that indicates the code length. For example, in Fig. 3(b) 16 bits after a 48th bit from the beginning of the data-burst (that is, the preamble d) and 16 bits after a 192nd bit, that is, a total of 32 bits is used as comparison data.

The comparison part 223 makes a comparison between the reference data extracted in the reference data extracting part 221 and each piece of comparison data extracted from a data-burst generated in the comparison data extracting part 222 within a time interval with a predetermined time width set before and after the instant of having extracted the reference data, and outputs the comparison result for each pair of reference and comparison data. While in the above the operation of the comparison part 223 has been described focusing on the reference data, the operation can also equally be carried out focusing on the comparison data. In such an instance, the comparison part 223 makes a comparison between the comparison data extracted in the comparison data extracting part 222 and each piece of reference data extracted from a data-burst generated in the reference data extracting part 222 within a time interval with a predetermined time width set before and after the instant of having extracted the comparison data, and outputs the comparison result for each pair of comparison and reference data.

To implement such a function, the comparison part 223 of this example is provided with a FIFO memory for reference data (hereinafter referred to as a reference-side FIFO memory) 2231, a FIFO memory for comparison data (hereinafter referred to as a comparison-side FIFO memory) 2232, and pluralities of comparators 2233(0, 1), 2233(1, t) to 2233(m, t) and comparators 2233(-1, t) to 2233(-m, t).

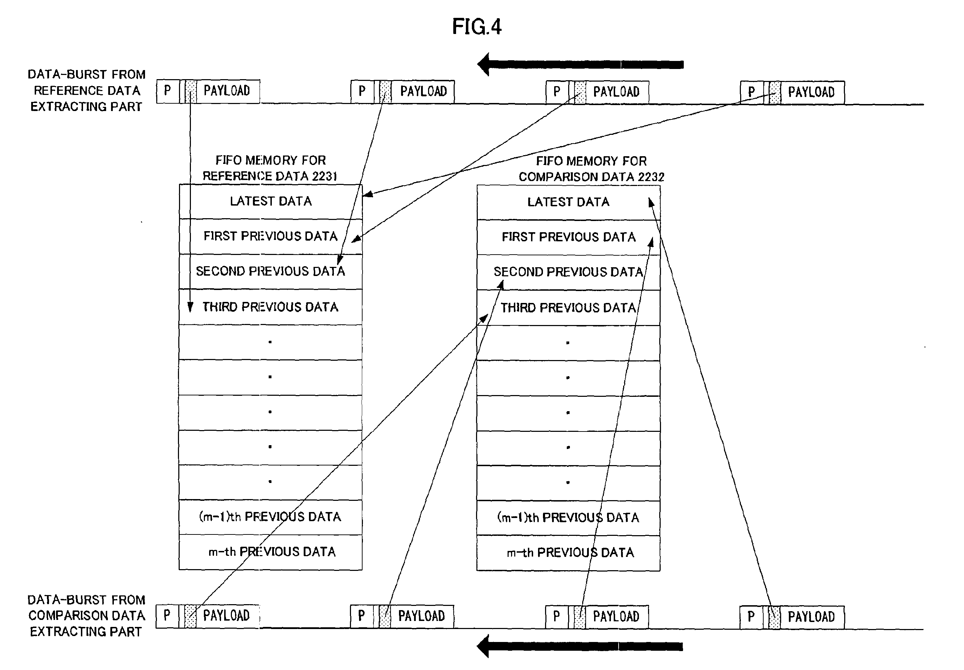

The reference-side FIFO memory 2231 stores, as shown in Fig. 4, a total of m+1 pieces of reference data in order of output from the reference data extracting part 221. The thus stored pieces of reference data will hereinafter be designated by Dr(t), Dr(t-1), ..., Dr(t-m) in reverse chronological order. On the other hand, the comparison-side FIFO memory 2232 stores, as shown in Fig. 4, a total of m+1 pieces of comparison data in order of output from the comparison data extracting part 222. The thus stored pieces of comparison data will hereinafter be designated by Dc(t), Dc(t-1), ..., Dc(t-m) in reverse chronological order. Here, m is a parameter that is predetermined by experiment in accordance with the maximum delay or time lag between the digital audio signals from the monitoring apparatus 2 and the reference tuner 21; for example, the parameter is set at 10.

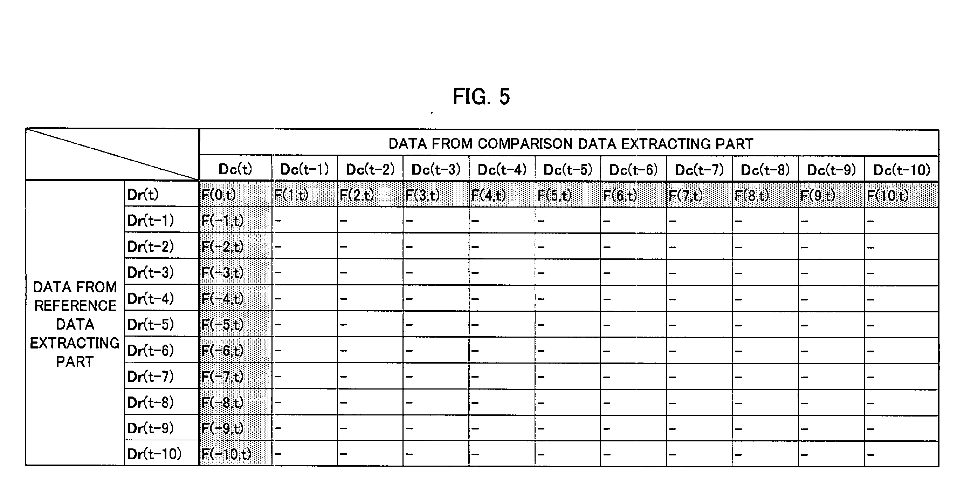

Upon each storage of new pieces of reference data Dr(t) and comparison data Dc(t) in the reference-side FIFO memory 2231 and the comparison-side FIFO memory 2232, the comparators 2233(0, t), 2233(1, t) to 2233(m, t) and 2233(-1, t) to 2233(-m, t) make comparisons between the reference and the comparison data in such combinations as shown in Fig. 5. That is, the comparator 2233(0, t) makes a comparison between the newly stored pieces of reference data Dr(t) and Dc(t), and provides a comparison output as a delay-0 comparison result F(0, t). The comparators 2233(1, t) to 2233(m, t) compare the reference data Dr(t) with the previous pieces of comparison data Dc(t-1), Dc(t-2), ..., Dc(t-m) already stored in the comparison-side FIFO memory 2231, and provide comparison outputs as delay-1, delay-2, ..., delay-m comparison results F(1, t), F(2, t), ..., F(m, t), respectively. The comparators 2233(-1, t) to 2233(-m, t) compare the comparison data Dc(t) with the previous pieces of reference data Dr(t-1), Dr(t-2), .., Dr(t-m) already stored in the reference-side FIFO memory 2231, and provide comparison outputs as delay-(-1), delay-(-2), ..., delay-(-m) comparison results F(-1, t), F(-2, t), ..., F(-m, t), respectively. The comparison results are each represented by one bit that takes either one of a logical value 1 indicating a coincidence between the reference and the comparison data and a logical value 0 indicating a noncoincidence.

The decision part 224 provides a coincidence-detected signal to the signal line 53 when a coincidence occurred n times in a row in the result of comparison between the reference and the comparison data of any one of pairs of pieces of reference and comparison data that are output from the comparison part 223. To perform this, the decision part 224 of this example is provided with comparison-result FIFO memories 2241(0, t), 2241(1, t) to 2241(m, t) and 2241(-1, t) to 2241(-m, t), AND gates 2242(0, t), 2242(1, t) to 2242(m, t) and 2242(-1, t) to 2242(-m, t), and an OR gate 2243.

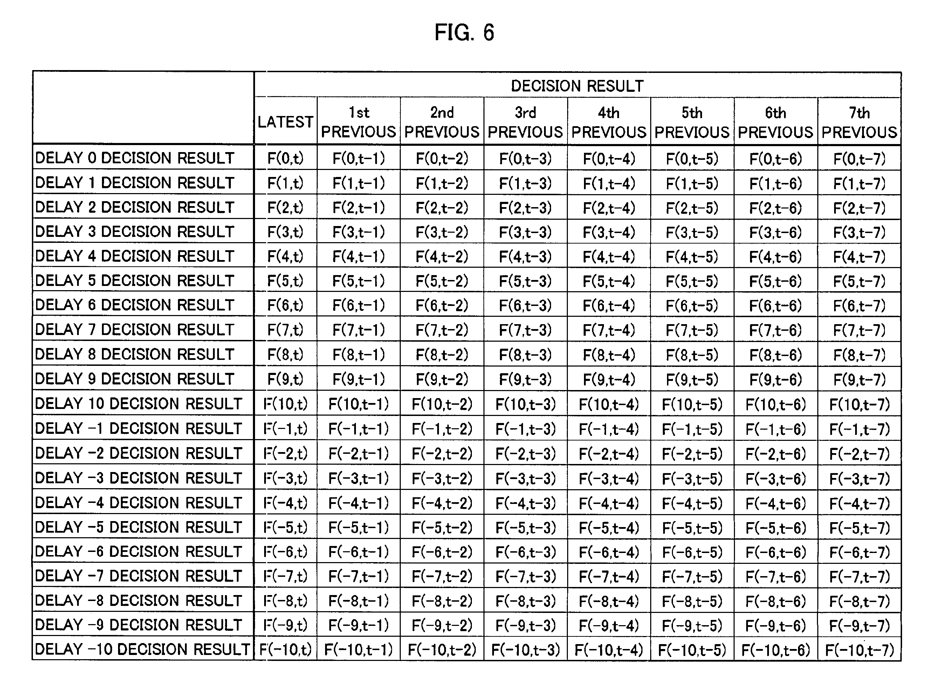

The comparison-result FIFO memories 2241(0, t), 2241(1, t) to 2241(m, t) and 2241(-1, t) to 2241(-m, t) store n pieces of comparison results F(0, t), F(1, t) to F(m, t) and F(-1, t) to F(-m, t) in reverse chronological order, where n is a positive integer equal to or greater than 2. Assuming that n = 8, the comparison-result FIFO memory 2241(0, t) stores F(0, 1), F(0, t-1), ..., F(0, t-7) that are the latest to the seventh previous delay-0 comparison results shown in Fig. 6. Similarly, the comparison-result FIFO memories 2241(1, t) to 2241(m, t) store, if m = 10, the latest to the seventh previous delay-1 to delay-10 comparison results shown in Fig. 6, and the comparison-result FIFO memories 2241(-1, t) to 2241(-m, t) store the latest to the seventh previous delay-(-1) to delay-(-10) comparison results shown in Fig. 6.

The AND gates 2242(0, t), 2242(1, t) to 2242(m, t) and 2242(-1, t) to 2241(-m, t) have a one-to-one correspondence with the comparison-result FIFO memories 2241(0, t), 2241(1, t) to 2241(m, t) and 2241(-1, t) to 2241(-m, t), and the AND gates each provide a coincidence-detected output when a coincidence occurs in every comparison result stored in the corresponding comparison-result FIFO memory, and yield a noncoincidence-detected output at all other times.

The OR gate 2243 provides a coincidence-detected output when a coincidence occurs in any one of the outputs from the AND gates 2242(0, t), 2242(1, t) to 2242(m, t) and 2242(-1, t) to 2242(-m, t).

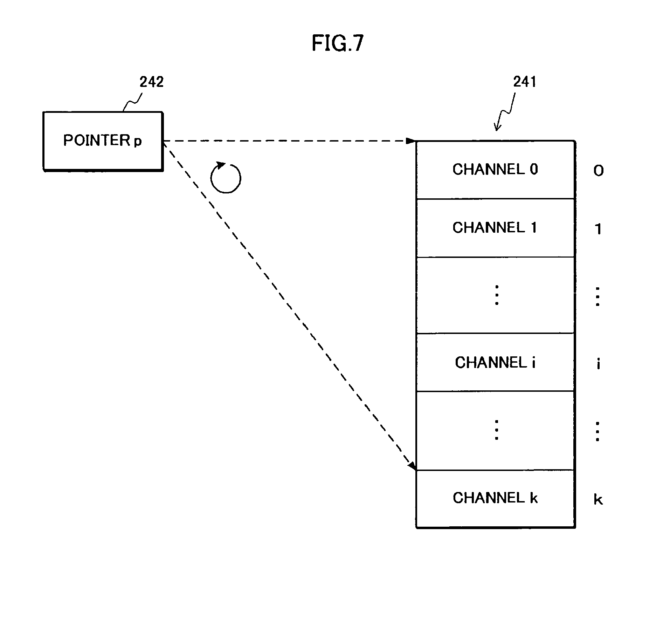

Turning back to Fig. 1, the transmitting part 23 is a unit from which data on the channel selecting status of the TV 1, obtained by the monitoring apparatus 2, is transmitted to a center, not shown, at a predetermined time. The storage part 24 is used to temporarily store the channel selecting status data and various pieces of preset information necessary for measurement by the monitoring apparatus 2. Among the pieces of preset information is a list of channels subject to monitoring. This is such a list 241 as shown in Fig. 7, which contains all channels (Channel 0 to Channel k in this example) receivable by the digital tuner 11, every entry having stored therein information about one channel. The control part 25 uses this channel information to indicate a particular channel to the reference tuner 21 at one time. Incidentally, a pointer (p) 242 in Fig. 7 indicates that channel in the channel list 241 which is subject to monitoring next, and takes a value in the range of between 0 to k.

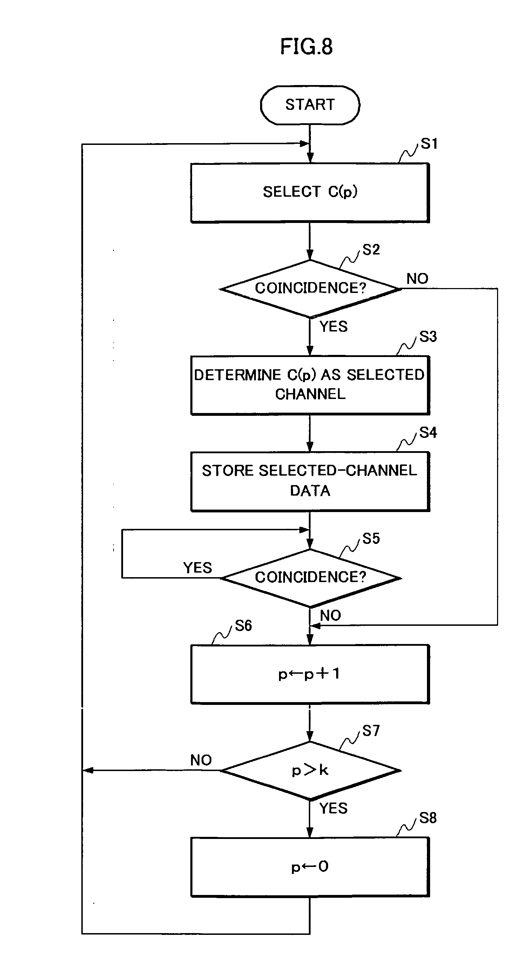

The control part 25 is to control the monitoring apparatus 2 in its entirety, and is implemented by MPU and a control program. The flow of control by the control part 25 is shown in Fig. 8.

A description will be given below of the operation of this embodiment.

The control part 25 starts the channel monitoring procedure of Fig. 8 with indicating information of the channel specified by the pointer p to the reference tuner 21 via the signal line 51, causing it to receive the specified channel (step S1). This channel will hereinafter be designated by C(p). As the result of this, the reference tuner 21 transmits the digital audio signal of the channel C(p) to the digital audio signal comparison part 22 via the signal line 52. On the other hand, the audio signal of the channel being selected by the digital tuner 11 of the TV 1 is output from a loudspeaker (not shown) and, at the same time, the audio signal is provided from the output terminal 12 via the cable 3 to the monitoring apparatus 2, wherein it is input to the digital audio signal comparison part 22.

Upon input thereto of the digital audio signal from the reference tuner 21 via the signal line 52, the reference data extracting part 221 of the digital audio signal comparison part 22 generates IEC61937-1-defined data-bursts from the input digital audio signal, then extracts, for each data-burst, a bit string at a predetermined position as reference data, and stores it in the reference-side FIFO memory 2231 of the comparison part 223. On the other hand, upon input thereto of the digital audio signal via the cable 32 from the output terminal 12 of the TV 1, the comparison data extracting part 222 generates IEC61937-1-defined data-bursts from the input digital audio signal, then extracts, for each data-burst, a bit string at a predetermined position as comparison data, and stores it in the comparison-side FIFO memory 2232 of the comparison part 223.

Each time new pieces of reference and comparison data are stored one by one in the reference-side FIFO memory 2231 and the comparison-side FIFO memory 2231, respectively, the comparison part 223 compares the reference data and the comparison data in such combinations as shown in Fig. 5 by means of the comparators 2233(0, t), 2233(1, t) to 2233(m, t) and 2233(-1, t) to 2233(-m, t), and outputs the comparison results to the decision part 224.

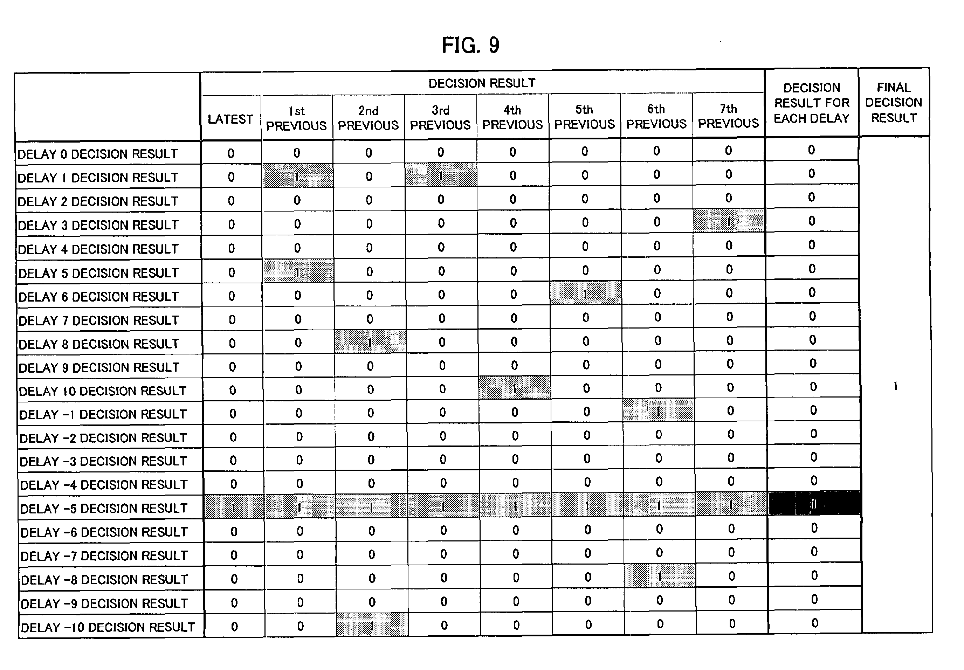

The decision part 224 stores n previous comparison results from the comparison part 223 in the comparison-result FIFO memories 2241(0, t), 2241(1, t) to 2241(m, t) and 2241(-1, t) to 2241(-m, t) in reverse chronological order as depicted in Fig. 6. Then, the AND gates 2242(0, t), 222(1, t) to 2242(m, t) and 2242(-1, t) to 2242(-m, t) make checks to determine whether or not the comparison results stored in the corresponding comparison-result FIFO memories are all coincident, and provide coincidence-detected outputs only when the comparison results are all coincident. The OR gate 243 provides a coincidence-detected signal to the signal line 5 when any one of the outputs from the AND gates 2242(0, t), 222(1, t) to 2242(m, t) and 2242(-1, t) to 2242(-m, t) is a coincidence-detected output. Accordingly, assuming that the comparison-result FIFO memories have stored therein such comparison results as shown in Fig. 9, the decision results by the AND gates for each delay and the final decision results by the OR gate will become such as shown in Fig. 9; namely, it is decided that the digital audio signals from the reference tuner 21 and the digital audio signal from the output terminal 12 of the TV 1 coincide.

The control part 25 monitors the output from the digital audio signal comparison part 22 to check whether it provides the coincidence-detected output within a predetermined time interval (step S2); if no coincidence-detected output is provided within the predetermined time interval (NO in step S2), the control part increments the value of the pointer p by one (step S6), and if the value does not exceed the maximum value k (No in step S7), then the control part returns to step S1 and repeats the above-described processing for the next channel subject to monitoring in the channel list 241. When the value of the pointer p exceeds the maximum value k (YES in step S7), the control part resets the value of the pointer p to 0 (step S8), then returns to step S3, and repeats the above-described processing for the first channel subject to monitoring in the channel list 241.

On the other hand, when it is found in step S2 that the digital audio signal comparison part 22 provides the coincidence-detected output, the control part 25 determines the channel C(p) as the currently selected channel (step S3). And the control part generates and stores one piece of selected channel data in the storage part 24 (step S4). The one piece of selected channel data includes information on the selected channel and the current time.

Next, the control part 25 monitors the output from the digital audio signal comparison part 22 to check whether it continues outputting the coincidence-detected signal (step S5). When a user is watching the same program without changing channel of the TV 1, the digital audio signal comparison part 22 keeps on outputting the coincidence-detected signal, and consequently, the control part 25 stays in step S5. If the user changes the channel of the TV 1, however, the digital audio signal comparison part 22 stops outputting the coincidence-detected signal. Upon detecting it (NO in step S5), the control part 25 goes to step S6 and repeats the above-described processing to thereby search for the channel switched. In this case, as described in patent document 1, the switched channel detected by intercepting a signal emanating from a remote control signal transmitter of the TV 1 can also be set as the channel to be monitored first. Since at the time of channel switching the format of the digital audio signal from the output terminal 12 temporarily changes to PAUSE, it is also possible for the control part to proceed from step S5 to S6 upon detection of this PAUSE.

As described above, this embodiment ensures accurate identification of the channel being selected by the user, for the reasons given below. That is, even in substantially a silent channel in which the frequency spectrum of reproduced sound or speech does not ever appear or, if it appears, at a very low level substantially equal to a noise level, the digital audio signal of such a channel contains signals clearly distinguishable from digital audio signals of the other channels, and this embodiment compares such signals on a digital-wise basis.

According to this embodiment, when the comparison result of any one of the pairs of reference and comparison data from the comparison part 223 indicated a coincidence a plurality of times in succession, the decision part 224 of the digital audio signal comparison part 22 outputs a coincidence-detected signal on the signal line 53--this provides increased accuracy in channel identification.

While the present invention has been described above in connection with one embodiment, the invention is not limited specifically to the embodiment but various other additions and modifications may be made. For example, the following configurations are also possible.

In the payloads of the data-bursts defined by IEC61937-1 are mapped audio sample words contained in the sub-frames defined by IEC60958-1. Accordingly, a comparison of the contents of the payloads of the data-bursts can also be made by comparing the contents of the audio sample words of sub-frames. That is, in the present invention processing of comparing the contents of the payloads of the data-bursts includes processing of comparing the contents of the audio sample words.

While in the above the TV 1 with one digital tuner 11 built therein has been exemplified as the TV to be monitored for audience measurement, the number of built-in tuners are not limited specifically to one, and TVs having built therein plural kinds of digital tuners such as a terrestrial analog tuner and a BS analog tuner may also be monitored for audience measurement. In this instance, according to the kind of TV, an analog audio signal from the built-in analog tuner is converted in the TV to a digital audio signal of a PCM format, which is output from the output terminal 12. In the case of monitoring such a TV, the meter 2 is additionally equipped with a function of determining whether the digital audio signal from the output terminal 12 is of the PCM-format or non-PCM-format (MPEG2-ACC, for instance), and if the digital audio signal is of the non-PCM-format, since the built-in digital tuner 11 is being selected, the configuration of the above-described embodiment is used to identify the channel being selected ; and if the digital audio signal is PCM-format, since the built-in analog tuner is being selected, the PCM-format digital audio signal from the TV 1 is converted to an analog audio signal, which is compared in spectrum with an analog audio signal from the reference analog tuner in the meter 2 as described in patent document 1, thereby identifying the channel being selected. Furthermore, whether the digital audio signal from the output terminal 12 is of the PCM- or non-PCM-format can be determined by checking preambles (Pc) of the data-burst.

When the TV 1 is an AV TV having an external input terminal so that it can be also as a monitor of a video tape recorder or similar AV equipment, the source being actually selected on the TV is determined first, and when the source is a broadcasting wave, the channel selecting status monitoring can be performed. The source being selected can be determined through use, for example, by "AV terminal Detecting Method" disclosed in Japanese Patent No. 1627852, or "External Input Terminal Detecting Method and Apparatus" described in Pat. Appln. Kokai Publication 2003-219286.

The transmitting part 23 is adapted to send the selected channel data recorded in the storage part 24 to the center via the cable 4, but it may also be adapted to send the data by radio to the center, and in the case where an intermediary device called an online meter for transmitting the selected channel data is provided between the meter 2 and the center, the selected channel data may also be sent by wire or radio to the intermediary device.

## Claims

1. A TV channel selecting status monitoring method which identifies the channel being actually received by a TV set (1) having at least one built-in digital tuner (11) and a digital audio output terminal (12) from which video and audio signals of the channel selected by said built-in tuner can be provided to a display and a loudspeaker, respectively, and a digital audio signal of said selected channel can also be output, said method comprising the steps of:
a) controlling the channel tuning status of a reference tuner (21) to bring a digital audio signal from said reference tuner into coincidence with the digital audio signal output from said digital audio output terminal (12) of said TV set (1), said reference tuner being capable of outputting a digital audio signal of an arbitrary one of a predetermined number of channels; and
b) determining, as the currently selected channel, the channel being tuned by said reference tuner (21) at the time when said both digital audio signals coincide with each other, and storing in storage means (24) selected-channel data containing information about said channel determined as being currently selected and the corresponding time information;
**characterized in that**:
said step a) includes a step of making a check, in consideration of a time-base delay of said both digital audio signals, to see whether or not the contents of a payload of a data-burst generated from the digital audio signal output from said digital audio output terminal (12) of said TV (1) coincide with the contents of a payload of a data-burst generated from the digital audio signal output from said reference tuner (21).

2. The TV channel selecting status monitoring method of claim 1, **characterized in that** said step a) includes the steps of:
a-1) for each data-burst generated from said digital audio signal output from said reference tuner (21), extracting a bit string at a predetermined position as reference data;
a-2) for each data-burst generated from said digital audio signal output from said digital audio output terminal (12), extracting, as comparison data, a bit string at the same position as said predetermined position;
a-3) for each pair of reference and comparison data, comparing said reference data extracted in said step a-1) and said comparison data extracted from said data-burst generated in said step a-2) within a time interval with a predetermined time width set equally before and after the instant of having extracted said reference data, and outputting the result of comparison for said each pair; and
a-4) outputting a coincidence-detected signal when a coincidence is found in the comparison result in any one of said pairs of reference and comparison data.

3. The TV channel selecting status monitoring method of claim 2, **characterized in that** said step a-4) is a step of outputting said coincidence-detected signal when a coincidence was found a plurality of times in succession in the comparison result in any one of said pairs of reference and comparison data.

4. A TV channel selecting status monitoring apparatus which identifies the channel being actually received by a TV set having at least one built-in digital tuner (11) and a digital audio output terminal (12) from which video and audio signals of said channel selected by said built-in tuner (11) can be provided to a display and a loudspeaker, respectively, and a digital audio signal of said selected channel can also be output, said apparatus comprising:
a reference tuner (21) capable of outputting a digital audio signal of an arbitrary one of a plurality of predetermined channels;
digital audio signal comparing means (22) by which the contents of a payload of a data-burst generated from said digital audio signal output from said digital audio output terminal (12) of said TV set (1) are checked for coincidence with the contents of a payload of a data-burst generated from said digital audio signal output from said reference tuner (21), in consideration of a time-base delay of both of said digital audio signals; and
control means (25) which controls the channel tuning status of said reference tuner (21) and which, when the output from said digital audio signal comparing means (22) changes from a coincidence-detected output to a noncoincidence-detected output, changes the channel tuned by said reference tuner (21) from one channel to another until the channel tuned by said reference tuner (21) is found for which said digital audio signal comparing means (22) outputs a coincidence-detected signal, determines, as the channel being actually selected, the channel being tuned by said reference tuner (21) when the output from said digital audio signal comparing means (22) returns to the coincidence-detected output, and outputs selected-channel data containing information about said channel as being currently tuned and the corresponding time information.

5. The channel selecting status monitoring apparatus of claim 4, **characterized in that** said digital audio signal comparing means (22) includes:
a reference data extracting part (221) which, for each data-burst generated from said digital audio signal output from said reference tuner (21), extracts a bit string at a predetermined position as reference data;
a comparison data extracting part (222) which, for each data-burst generated from said digital audio signal output from said digital audio output terminal (12), extracts, as comparison data, a bit string at the same position as said predetermined position;
a comparison part (223) which, for each pair of reference and comparison data, compares said reference data extracted in said reference data extracting part (221) and said comparison data extracted from said data-burst generated in said comparison data extracting part (222) within a time interval with a predetermined time width set equally before and after the instant of having extracted said reference data, and outputs the result of comparison for said each pair; and
a decision part (224) which outputs a coincidence-detected signal when a coincidence is found in the comparison result in any one of said pairs of reference and comparison data which are output from said comparison part (223).

6. The channel selecting status monitoring apparatus of claim 5, **characterized in that** said comparison part (223) includes:
a reference-side FIFO memory (2231) which stores, in reverse chronological order, a plurality of pieces of reference data extracted in said reference data;
a comparison-side FIFO memory (2232) which stores, in reverse chronological order, a plurality of pieces of comparison data extracted in said comparison extracting part; and comparators which, upon each input a new piece of reference data and a new piece of comparison data in said reference-side FIFO memory (2231) and said comparison-side FIFO memory (2232), makes a comparison between said newly input reference data and said newly input comparison data, between said newly input reference data and the comparison data already stored in said comparison-side FIFO memory (2232), and between said newly input comparison data and the reference data already stored in said reference-side FIFO memory (2231), and outputs a comparison output for each pair of reference and comparison data.

7. The channel selecting status monitoring apparatus of claim 5, **characterized in that** said decision part (224) outputs a coincidence-detected signal when a coincidence was found n times in succession in the comparison result for any one of the pairs of reference and comparison data which are output from said comparison part (223).

8. The channel selecting status monitoring apparatus of claim 7, **characterized in that** said decision part (224) includes:
comparison-result FIFOs (2241) each of which stores a plurality of previous comparison results for one pair of reference and comparison data which are output from said comparison part (223);
AND gates (2242) each of which detects whether a coincidence is found in every comparison result stored in said each comparison-result FIFO memory (2241), and
an OR gate (2243) into which the detected output is input from said each AND gate (2242).
